# EUROPEAN PATENT APPLICATION

(11) **EP 4 776 215 A1**
(43) Date of publication of application: **15.07.2026**
(21) Application number: 25812612.7
(22) Date of filing: 23.07.2025
(51) Int. Cl.: G06Q 50/10, G06Q 30/01, G06F 16/955, B41J 3/01

(54) **FOOD INFORMATION INQUIRY SYSTEM AND METHOD USING TWO-DIMENSIONAL CODE**

(30) Priority: 18.11.2024 KR 20240164160
(71) Applicant: National Food Safety Information Service, Seoul 04535 (KR); Korea Food & Drug Administration, Cheongju-si, Chungcheongbuk-do 28159 (KR)
(72) Inventor: KANG, Yong Mo, Seoul 04535 (KR); KIM, Sung Gon, Cheongju-si, Chungcheongbuk-do 28159 (KR); KIM, Ik Sang, Cheongju-si, Chungcheongbuk-do 28159 (KR); MOON, Seong, Seoul 04535 (KR); AHN, Chang Jun, Seoul 04535 (KR); LEE, Byoung Gon, Seoul 04535 (KR); LEE, Jae Yong, Seoul 04535 (KR); JUNG, Hee Seok, Seoul 04535 (KR); CHOI, Dan Bee, Seoul 04535 (KR); CHOI, Dae Weon, Cheongju-si, Chungcheongbuk-do 28159 (KR); CHOI, Jong Dong, Cheongju-si, Chungcheongbuk-do 28159 (KR); HAN, Gyu Hong, Cheongju-si, Chungcheongbuk-do 28159 (KR)
(74) Representative: Isarpatent
(86) International application number: PCT/KR2025/010893
(87) International publication number: WO 2026/106024

(57) **Abstract**

Provided is a system and method for inquiring about food information using a two-dimensional (2D) code, which includes: a producer terminal configured to upload food/certification information about food; a distribution manager terminal configured to upload distribution history information about the food; a user terminal configured to upload user-based food information about the food; and a food information providing server configured to store the food/certification information uploaded by the producer terminal, the distribution history information uploaded by the distribution manager terminal, and the user-based food information uploaded by the user terminal, and to generate a 2D code for providing a food information URL for inquiring about the stored food/certification information or uploading the distribution history information and the user-based food information.

## Description

### [Technical Field]

The present invention relates to a system and method for inquiring about food information, and more specifically, to a system and method for inquiring about food information using two-dimensional (2D) codes.

### [Background Art]

In modern society, with various social changes, such as aging and individualization, consumer demand for food information is increasing. Food packaging indicates not only safety information but also more information related to health and nutrition, such as organic certification, country of origin, allergenic components, and nutritional content, but as the amount of information grows, readability decreases, making it difficult for consumers to understand. Therefore, the need for improvement is growing.

In addition, with the recent development of information technology, all fields are transitioning to digital, and food purchases and consumption using online distribution networks, such as delivery applications, early-morning food delivery, and online portals, are continuously increasing. In this social trend, consumers desire clear information sharing among producers, distributors, and users to ensure food safety and reliability. However, in online food purchases, consumers may only rely on the information provided by sellers, which makes them relatively more vulnerable than offline purchases.

Due to these environmental changes, there is an increasing need for a digital information system and information service that go beyond conventional food packaging to easily verify various types of food information and respond to food-related issues that arise at all stages of manufacturing, distribution, sales, and consumption. Moreover, there is a growing need for an information delivery system capable of automatic food identification connected to smart devices, in order to meet consumer demand for health and nutrition beyond conventional food safety and respond to the use of mobile devices.

Recently, QR code technology has been used in various fields. QR codes may have the benefit of storing a large amount of information in a small image and being easy to scan to access information through mobile devices, such as smartphones.

However, currently, QR codes only provide simple ingredient information about food.

### [Description of Invention]

### [Technical Problem]

The present invention is directed to providing a system for inquiring about food information using a 2D code.

The present invention is directed to providing a method of inquiring about food information using a 2D code.

### [Technical Solution]

A system for inquiring about food information using a two-dimensional (2D) code according to an object of the present invention includes: a producer terminal that uploads food/certification information about food; and a food information providing server that stores the food/certification information uploaded by the producer terminal, generates a 2D code for providing a food information uniform resource locator (URL) for inquiring about the stored food/certification information, and provides the 2D code to a user terminal.

The food/certification information may include information related to the food, including an item, a manufacturer, a manufacturing data, nutritional components, raw materials, allergy-causing substances, an expiration date, traceability, and government certification, and a link associated with detailed information thereof.

The food information providing server may provide the generated 2D code to the producer terminal.

The producer terminal may be configured to receive the 2D code from the food information providing server and control the 2D code to be printed on packaging of the food.

A method of inquiring about food information using a two-dimensional (2D) code according to another object of the present invention includes: uploading, by a producer terminal, food/certification information about food to a food information providing server; storing, by the food information providing server, the food/certification information uploaded by the producer terminal; automatically generating, by the food information providing server, a 2D code for providing a food information uniform resource locator (URL) that allows inquiry of the stored food/certification information, and providing, by the food information providing server, the automatically generated 2D code to a user terminal.

The method may further include receiving, by the producer terminal, the 2D code from the food information providing server and controlling the 2D code to be printed on packaging of the food.

The food/certification information may include information related to the food, including an item, a manufacturer, a manufacturing data, nutritional components, raw materials, allergy-causing substances, an expiration date, traceability, and government certification, and a link associated with detailed information thereof.

### [Advantageous Effects]

According to the above-described system and method for inquiring about food information using a 2D code, the 2D code not only provides information about food in a one-way manner, but is configured to allow uploading and updating of food-related information, including items, manufacturers, manufacturing dates, nutritional components, raw materials, allergenic substances, expiration dates, traceability, and government certification, together with a link associated with detailed information thereof, thereby enabling user-based food traceability and information sharing.

### [Description of Drawings]

FIG. 1 is a block diagram of a system for inquiring about food information using a 2D code according to an embodiment of the present invention.
FIG. 2 is a flowchart of a method of inquiring about food information using a 2D code according to an embodiment of the present invention.

### [Modes of the Invention]

While embodiments according to the concept of the present disclosure are susceptible to various modifications and alternative forms, specific embodiments thereof are shown by way of embodiment in the drawings and will herein be described in detail. It should be understood, however, that there is no intent to limit the embodiments according to the concept of the present disclosure to the particular forms disclosed, but on the contrary, the embodiments according to the concept of the present disclosure are to cover all modifications, equivalents, and alternatives falling within the spirit and scope of the invention. Like numbers refer to like elements throughout the description of the drawings.

It will be understood that, although the terms "first," "second," etc., may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

It will be understood that when a first element is referred to as being "connected" or "coupled" to a second element, the first element can be directly connected or coupled to the second element or intervening elements may be present. In contrast, when an element is referred to as being "directly connected" or "directly coupled" to another element, there are no intervening elements present.

The terminology used herein is for the purpose of describing particular embodiments only and is not intended to be limiting of the invention. As used herein, the singular forms "a" and "an" are intended to include the plural forms as well, unless the context clearly indicates otherwise. It will be further understood that the terms "comprise," "comprising," "include" and/or "including" used herein specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meanings as commonly understood by those of ordinary skill in the art to which this invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

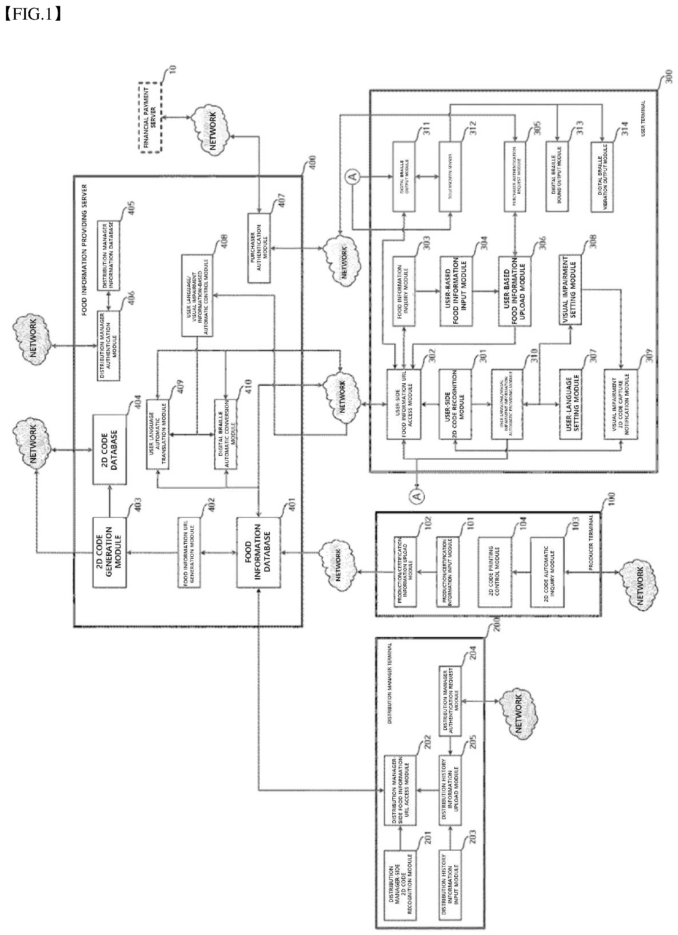

FIG. 1 is a block diagram of a system for inquiring about food information using a 2D code according to an embodiment of the present invention.

Referring to FIG. 1, a system for inquiring about food information using a 2D code according to an embodiment of the present invention may include a producer terminal 100, a distribution manager terminal 200, a user terminal 300, and a food information providing server 400.

Hereinafter, the detailed configuration will be described.

The producer terminal 100 may be configured to upload food/certification information about food to the food information providing server 400.

Here, the food/certification information may include an item, a manufacturer, a manufacturing date, ingredients, an expiration date, and certification information of the Ministry of Food and Drug Safety of the food.

The producer terminal 100 may include a production/certification information input module 101, a production/certification information upload module 102, a 2D code automatic inquiry module 103, and a 2D code printing control module 104.

Hereinafter, the detailed configuration will be described.

The production/certification information input module 101 may be configured to receive production/certification information about food from the producer.

The production/certification information upload module 102 may be configured to upload the production/certification information received from the production/certification information input module 101 to the food information providing server 400.

The 2D code automatic inquiry module 103 may be configured to inquire about a 2D code generated for attachment to food on the food information providing server 400.

The 2D code printing control module 104 may be configured to control printing of the 2D code inquired about by the 2D code automatic inquiry module 103 for attachment to food.

The distribution manager terminal 200 may be configured to upload distribution history information about food. Here, the distribution history information may include a manufacturing date, an expiration date, a distribution history, and the like. The distribution history may include a production factory or production site, a transportation method, a storage warehouse, a wholesaler, a retailer, such as a convenience store, and the date of such history.

The distribution manager terminal 200 may include a distribution manager-side 2D code recognition module 201, a distribution manager-side food information URL access module 202, a distribution history information input module 203, a distribution manager authentication request module 204, and a distribution history information upload module 205.

Hereinafter, the detailed configuration will be described.

The distribution manager-side 2D code recognition module 201 may be configured to scan and recognize the 2D code attached to the food.

The distribution manager-side food information URL access module 202 may be configured to access a corresponding web page using a food information URL included in the 2D code recognized by the distribution manager-side 2D code recognition module 201.

The distribution history information input module 203 may be configured to receive distribution history information from the distribution manager.

The distribution manager authentication request module 204 may be configured to request authentication of the distribution manager from the food information providing server 400 and receive an authentication result of the distribution manager in real time. The distribution manager needs to be a pre-registered distribution manager for the relevant food.

The distribution history information upload module 205 may be configured to, when the distribution manager authentication result is received in real time by the distribution manager authentication request module 204, upload the distribution history information received by the distribution history information input module 203 on the web page accessed using the food information URL by the distribution manager-side food information URL access module 202.

The user terminal 300 may be configured to upload user-based food information about food. Here, the user-based food information may include reviews, comments, and recipes for food.

The user terminal 300 may include a user-side 2D code recognition module 301, a user-side food information URL access module 302, a food information inquiry module 303, a user-based food information input module 304, a purchaser authentication request module 305, a user-based food information upload module 306, a user language setting module 307, a visual impairment setting module 308, a visual impairment 2D code capture notification module 309, a user language/visual impairment information automatic providing module 310, a digital braille output module 311, a touchscreen sensor 312, a digital braille sound output module 313, and a digital braille vibration output module 314.

Hereinafter, the detailed configuration will be described.

The user-side 2D code recognition module 301 may be configured to scan and recognize the 2D code attached to the food.

The user-side food information URL access module 302 may be configured to access a corresponding web page using a food information URL included in the 2D code recognized by the user-side 2D code recognition module 301.

The food information inquiry module 303 may be configured to inquire about food information of the food on the web page accessed by the user-side food information URL access module 302.

The user-based food information input module 304 may be configured to receive user-based food information about the food from the user.

The purchaser authentication request module 305 may be configured to request purchaser authentication for food from the food information providing server 400 and receive an authentication result of the purchaser in real time.

The user-based food information upload module 306 may be configured to, when the purchaser authentication result is received by the purchaser authentication request module 305 in real time, upload the user-based food information received by the user-based food information input module 304 to the food information providing server 400.

The user language setting module 307 may be configured to pre-set user language information of the user.

The visual impairment setting module 308 may be configured to pre-set visual impairment information when the user is visually impaired.

The visual impairment 2D code capture notification module 309 may be configured to, when the visual impairment information has been pre-set by the visual impairment setting module 308, output a 2D code capture notification for the visually impaired using voice or sound effects in response to a 2D code being captured by the user-side 2D code recognition module 301. This allows visually impaired individuals to audibly confirm whether the 2D code is properly captured on the scanner.

The user language/visual impairment information automatic providing module 310 may be configured to provide the user language information set by the user language setting module 307 and the visual impairment information set by the visual impairment setting module 308 to the food information providing server 400 in advance.

The digital braille output module 311 may be configured to, when the user is visually impaired, output digital braille on the web page accessed by the user-side food information URL access module 302. The digital braille may be displayed on the display of the user terminal 300.

The touchscreen sensor 312 may be configured to detect a touch input of the user on the digital braille output from the digital braille output module 311.

The digital braille sound output module 313 may be configured to output digital braille corresponding to a touch input detected by the touchscreen sensor 312 as digital braille sound. The digital braille sound may be composed of tones that allow identification of the digital braille that is currently being touched.

In this case, the digital braille sound output module 313 may be configured to, when a touch at a predetermined point is maintained by the touchscreen sensor 312, automatically move the digital braille from the right side of the screen to the left side of the screen based on the corresponding point and automatically output digital braille sound. That is, regardless of what point on the display a visually impaired person touches, digital braille characters automatically move from the right side to the left side of the screen based on the point while digital braille sound is sequentially output. Since it is difficult for a visually impaired person to identify a starting point of the digital braille, the convenience may be improved by automatically allowing sequential output of digital braille sound when a touch is maintained at any point.

The digital braille vibration output module 314 may be configured to output digital braille corresponding to a touch input detected by the touchscreen sensor 312 as digital braille vibration.

Here, the digital braille vibration output module 314 may be configured to, when a touch at a predetermined point is maintained by the touchscreen sensor 312, automatically move the digital braille from the right side of the screen to the left side based on the corresponding point and automatically output digital braille vibrations. Similarly, regardless of what point on the display a visually impaired person touches, the digital braille characters automatically move from the right side of the screen to the left side based on the point while the digital braille vibrations are sequentially output. Since it is difficult for a visually impaired person to identify a starting point of the digital braille, the convenience may be improved by automatically allowing sequential output of digital braille vibrations when a touch is maintained at any point.

The food information providing server 400 may be configured to store food/certification information uploaded by the producer terminal 100, distribution history information uploaded by the distribution manager terminal 200, and user-based food information uploaded by the user terminal 300, and generate a 2D code for providing a food information URL for inquiring about the stored food/certification information, or uploading and inquiring about distribution history information and user-based food information.

Here, the food information may include food/certification information, distribution history information, and user-based food information.

The food information providing server 400 may include a food information database 401, a food information URL generation module 402, a 2D code generation module 403, a 2D code database 404, a distribution manager information database 405, a distribution manager authentication module 406, a purchaser authentication module 407, a user language/visual impairment information-based automatic control module 408, a user language automatic translation module 409, and a digital braille automatic conversion module 410.

The detailed configuration will be described below.

The food information database 401 may be configured to store production/certification information uploaded by the production/certification information upload module 102 of the producer terminal 100, the distribution history information uploaded by the distribution history information upload module 205 of the distribution manager terminal 200, and the user-based food information uploaded by the user-based food information upload module 304 of the user terminal 300.

The food information URL generation module 402 may be configured to automatically generate a food information URL corresponding to a web page of the food/certification information, distribution history information, and user-based food information stored in the food information database 401.

The 2D code generation module 403 may be configured to automatically generate a 2D code for accessing the food information URL automatically generated by the food information URL generation module 402.

The 2D code database 404 may be configured to store the 2D code automatically generated by the 2D code generation module 403.

The distribution manager information database 405 may be configured to store distribution manager information in advance.

The distribution manager authentication module 406 may be configured to, in response to an authentication request of the distribution manager from the distribution manager authentication request module 204 of the distribution manager terminal 200, authenticate the distribution manager by referring to the distribution manager information database 405 and transmit an authentication result of the distribution manager to the distribution manager authentication request module 204 in real time.

The purchaser authentication module 407 may be configured to, in response to a purchaser authentication request from the purchaser authentication request module 305 of the user terminal 300, authenticate the purchaser through a financial payment server and transmit an authentication result of the purchaser to the purchaser authentication request module 305 in real time.

The user language/visual impairment information-based automatic control module 408 may be configured to automatically control the content of the corresponding web page to be converted based on the user language information and visual impairment information provided in advance by the user language/visual impairment information automatic providing module 310 of the user terminal 300.

The user language automatic translation module 409 may be configured to automatically translate the content of the web page into the corresponding user language according to the automatic control of the user language/visual impairment information-based automatic control module 408.

The digital braille automatic conversion module 410 may be configured to automatically convert the content of the web page into digital braille according to the automatic control of the user language/visual impairment information-based automatic control module 408.

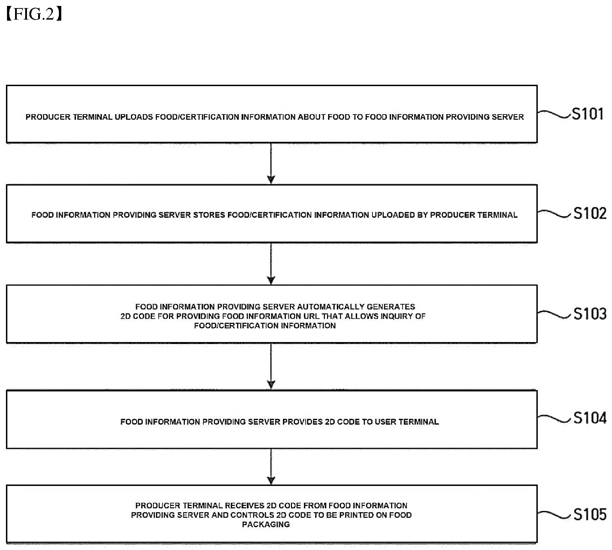

FIG. 2 is a flowchart of a method of inquiring about food information using a 2D code according to an embodiment of the present invention.

Referring to FIG. 2, the producer terminal 100 uploads food/certification information about food to the food information providing server 400 (S101).

Next, the food information providing server 400 stores the food/certification information uploaded by the producer terminal 100 (S102).

Next, the food information providing server 400 automatically generates a 2D code for providing a food information URL that allows inquiry of the stored food/certification information (S103).

Next, the food information providing server 400 provides the automatically generated 2D code to the user terminal 300 (S104).

Next, the producer terminal 100 receives the 2D code from the food information providing server 400 and controls the 2D code to be printed on the food packaging (S105).

Here, the food/certification information may include an item, a manufacturer, a manufacturing date, ingredients, an expiration date, and certification information of the Ministry of Food and Drug Safety of the food.

Although the present invention has been described with reference to the above embodiments, it will be understood by those skilled in the art that various modifications and changes may be made to the present invention without departing from the spirit and scope of the present invention as described in the following claims.

### [Technical Field]

100: producer terminal
101: production/certification information input module
102: production/certification information upload module
103: 2D code automatic inquiry module
104: 2D code printing control module
200: distribution manager terminal
201: distribution manager-side 2D code recognition module
202: distribution manager-side food information URL access module
203: distribution history information input module
204: distribution manager authentication request module
205: distribution history information upload module
300: user terminal
301: user-side 2D code recognition module
302: user-side food information URL access module
303: food information inquiry module
304: user-based food information input module
305: purchaser authentication request module
306: user-based food information upload module
307: user language setting module
308: visual impairment setting module
309: visual impairment 2D code capture notification module
310: user language/visual impairment information automatic providing module
311: digital braille output module
312: touchscreen sensor
313: digital braille sound output module
314: digital braille vibration output module
400: food information providing server
401: food information database
402: food information URL generation module
403: 2D code generation module
404: 2D code database
405: distribution manager information database
406: distribution manager authentication module
407: purchaser authentication module
408: user language/visual impairment information-based automatic control module
409: user language automatic translation module
410: digital braille automatic conversion module

## Claims

1. A system for inquiring about food information using a two-dimensional (2D) code, comprising:
a producer terminal that uploads food/certification information about food; and
a food information providing server that stores the food/certification information uploaded by the producer terminal, generates a 2D code for providing a food information uniform resource locator (URL) for inquiring about the stored food/certification information, and provides the 2D code to a user terminal.

2. The system of claim 1, wherein the food/certification information includes an item, a manufacturer, a manufacturing date, ingredients, an expiration date, and certification information of the Ministry of Food and Drug Safety of the food.

3. The system of claim 1, wherein the food information providing server is configured to provide the generated 2D code to the producer terminal.

4. The system of claim 3, wherein the producer terminal is configured to receive the 2D code from the food information providing server and control the 2D code to be printed on packaging of the food.

5. A method of inquiring about food information using a two-dimensional (2D) code, comprising:
uploading, by a producer terminal, food/certification information about food to a food information providing server;
storing, by the food information providing server, the food/certification information uploaded by the producer terminal;
automatically generating, by the food information providing server, a 2D code for providing a food information uniform resource locator (URL) that allows inquiry of the stored food/certification information, and
providing, by the food information providing server, the automatically generated 2D code to a user terminal.

6. The method of claim 5, further comprising receiving, by the producer terminal, the 2D code from the food information providing server and controlling the 2D code to be printed on packaging of the food.

7. The method of claim 5, wherein the food/certification information includes an item, a manufacturer, a manufacturing date, ingredients, an expiration date, and certification information of the Ministry of Food and Drug Safety of the food.
